# EUROPEAN PATENT SPECIFICATION

(11) **EP 3 112 320 B1**
(45) Date of publication and mention of the grant of the patent: **17.04.2024**
(21) Application number: 15754933.8
(22) Date of filing: 25.02.2015
(51) Int. Cl.: B01D 21/24, B01D 9/00, C02F 1/52

(54) **METHOD AND SYSTEM FOR THE CRYSTALLISATION OF STRUVITE FOR RECOVERING PHOSPHATES IN WASTEWATER**
VERFAHREN UND SYSTEM ZUR KRISTALLISATION VON STRUVIT ZUR RÜCKGEWINNUNG VON PHOSPHATEN IN ABWASSER
PROCÉDÉ ET SYSTÈME DE CRISTALLISATION DE STRUVITE POUR LA RÉCUPÉRATION DES PHOSPHATES DANS LES EAUX USÉES

(30) Priority: 26.02.2014 ES 201430265
(43) Date of publication of application: 04.01.2017
(73) Proprietor: Universidade de Santiago de Compostela, 15782 Santiago de Compostela (ES); FCC Aqualia, S.A., Madrid (ES)
(72) Inventor: GARRIDO FERNÁNDEZ, Juan Manuel, E-15782 Santiago de Compostela (ES); CRUTCHIK PEDEMONTE,Dafne, E-15782 Santiago de Compostela (ES)
(74) Representative: Clarke, Modet y Cía., S.L.
(86) International application number: PCT/ES2015/070131
(87) International publication number: WO 2015/128528

(56) References cited:
- CN-A- 101 560 001
- CN-A- 101 817 581
- CN-A- 102 963 970
- CN-A- 102 963 970
- JP-A- 2008 183 562
- KR-A- 20030 034 299
- US-A- 3 071 447
- US-A1- 2012 211 433
- Y. LI ET AL: "Struvite pellet crystallization in a high-strength nitrogen and phosphorus stream", WATER SCIENCE AND TECHNOLOGY, vol. 68, no. 6, 1 September 2013 (2013-09-01), pages 1300-1305, XP055417988, ISSN: 0273-1223, DOI: 10.2166/wst.2013.372
- KAZI P. FATTAH ET AL: "Determining the feasibility of phosphorus recovery as struvite from filter press centrate in a secondary wastewater treatment plant", JOURNAL OF ENVIRONMENTAL SCIENCE AND HEALTH. PART A: TOXIC HAZARDOUS SUBSTANCES AND ENVIRONMENTAL ENGINEERING, vol. 43, no. 7, 29 April 2008 (2008-04-29) , pages 756-764, XP055417989, US ISSN: 1093-4529, DOI: 10.1080/10934520801960052

## Description

### TECHNICAL FIELD

The invention relates a method and system of crystallizing ammonium phosphate hexahydrate magnesium, called struvite, specially designed for recovering phosphate in urban or industrial wastewater and in which an effluent with a low concentration phosphate, and a product, granular struvite, with a commercial value as slow-release fertilizer are obtained.

The system and method allow the recovery of phosphate from wastewater using a magnesium hydroxide suspension, preferably of industrial grade with high reactivity as an external source of magnesium ions and alkalinity. The crystallization system is particularly suitable for recovering phosphate in urban or industrial wastewater currents with concentrations above 50 mg P / L phosphate and preferably greater than 100 mg P / L, allowing phosphate recovery between 70% and 90 % containing raw wastewater and struvite production of granules with a preferably granule size between 1.0 and 5.0 mm.

### BACKGROUND

It is made a review of the prior art in the crystallization processes of phosphates in wastewater in general and in particular the use of magnesium and alkalinity sources for struvite crystallization in wastewater.

### Phosphate crystallization process in wastewater as struvite

Struvite crystallization is based on a controlled precipitation process in which a salt of ammonium phosphate and magnesium hexahydrate (MgNH₄PO₄-6H₂O) called struvite is obtained. Struvite crystallization occurs by a reversible reaction, producing a product with a molar ratio of 1: 1: 1 Mg⁺², NH₄ ⁺ and PO₄⁻³ (Doyle and Parsons, Water Res 36 (16), 3925-3940 (. 2002)). The stoichiometry of the process would be defined by the reaction (1). The struvite crystallization reaction is highly dependent on operating pH, temperature, concentrations of phosphate, ammonium and magnesium as well as the presence of other ions, such as calcium.

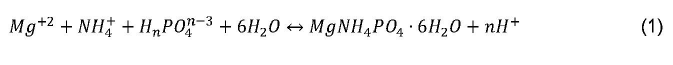

Many studies conducted in recent years around the controlled struvite in wastewater with high concentrations of phosphate, in which it has been shown that operating conditions directly affect the efficiency of struvite crystallization, and where recovery effectiveness of phosphates is mainly conditioned by the operating pH, which should preferably be in a range of 8.0 to 9.0, the temperature and the concentrations of the ions involved in the crystallisation reaction ( Andrade and Schuiling, Mineral Journal (Ukraine) J. Ukr. 23 (5/6), 37-46 (2001)).

pH crystallizer control is achieved by adding an alkali to neutralize hydrogen ions generating reaction shown in (1), it is usually used for NaOH. For those water streams with high carbon dioxide in dissolved, content such as those from anaerobic methanogenic reactors or sludge digesters, a neutralization of hydrogen ions formed by the gradual desorption of the dissolved carbon dioxide in such streams can be performed, using to this aim desorption or stripping systems by aerating the wastewater to be treated, in the input wastewater current prior to its introduction into the crystallizer or in the in the crystallization system.

Struvite crystallization reaction requires also the presence of appropriate concentrations of ammonium and magnesium ions, which should be in excess with respect to the phosphate ion concentration. Most wastewater streams with high concentrations of phosphate ion present high content of ammonium ion, so it is not necessary to take any corrective action, for those currents with poor ammonium ion concentration, the situation can be amended by adding a wastewater stream in which this element is in excess or directly adding ammonia (NH₃), which it also acts as an external source of alkalinity.

Struvite can crystallize either through homogeneous or heterogeneous crystallization. Homogeneous crystallisation takes place in a supersaturated solution in which there is no presence of crystals or other solids in suspension, and during which the molecules/ions generate small precipitate nuclei with a size of nanometers. Macroscopically no variation in the concentration of components in aqueous phase I is observed until after a time, called the induction time, the grouping of these nuclei provokes the appearance of small crystals, called fine, with a size in the order of few micrometers, due to a subsequent heterogeneous crystallization process. The induction time, in which no crystal formation in a homogeneous solution is observed, has a duration that depends, among others, on the level of supersaturation and temperature, ranging between 6 and 120 minutes, according to the operating conditions (Bouropoulos and Koutsoukos, J. Cryst. Growth. 213, 381-388 (2000)).

The heterogeneous crystallization process occurs only if there are precipitate crystals that promote struvite precipitation and crystallization on them, this process promoting crystal growth until equilibrium between liquid and solid phases is reached. It is important to note that the kinetics of heterogeneous crystallization process is affected by the concentration or specific surface (surface of crystals per unit volume of liquid phase) of struvite present in the medium and by the level of supersaturation and temperature solution. The heterogeneous crystallization process, which promotes crystal growth, occurs much more rapidly at low levels of supersaturation that the homogeneous crystallization process giving as product crystals of very small size, so it is of interest to promote heterogeneous crystallization if larger precipitates are required.

One of the major problems in the struvite crystallization process is associated with the formation of small struvite crystals (fine), which represent between 10% and 40% of the precipitate formed, compromising final effluent quality since due to this fact its low sedimentation rate, it can be washed with the treated effluent, compromising both the quality of effluent treaty and the economic viability of the process. The separation of fine crystals is usually performed using sedimentation systems or hydrocyclone separators, and it is advisable to always promote their recovery and growth within the crystallizer, encouraging the formation of larger crystals, about 1 mm or higher, which facilitates potential output market and marketing of struvite as a fertilizer. The kinetic and hydrodynamic factors crystallization system used affects the product obtained in relation to their particle size and composition and therefore the possible commercial release of the product.

### Using external sources of magnesium for struvite crystallization in wastewater

In most wastewater cases to be treated, magnesium is the limiting ion in the crystallization reaction struvite, thus it is usually to add magnesium oxide, magnesium hydroxide, magnesium chloride, magnesium carbonate, sulfate magnesium or seawater as external sources of magnesium ion. The sea water is usually added as a free source of magnesium ion in those facilities located near the coast, as it has a concentration of about 1285 mg / L of this cation.

Operating costs in the crystallization process of struvite mainly depend on the sources of alkalinity and magnesium used, which represent about 75% of the total cost of operation (Dockhorn, International Conference on Nutrient Recovery from Wastewater Streams, pp. 145-158 (2009)). Dockhorn (2009) documented costs ranging from 2-3 € and 10 € per kg P separately as struvite, in struvite crystallization systems. Señoráns et al. (Señoráns et al., Tecnologia del Agua 335, 26-35 (2011)) determined a precipitated cost operating 2.89 € / kg P in a struvite crystallization process at industrial scale, using seawater as a source of magnesium, mainly due to the consumption of alkali. Therefore, to make this technology more competitive it is necessary to properly select the sources of magnesium and alkalinity used. Magnesium sources commonly employed in the crystallization of struvite are MgClz, MgO, Mg (OH) ₂ or seawater.

US7622047 (B2) patent and the document Kazi P. Fattah et al. "Determining the feasibility of phosphorus recovery as struvite from filter press centrate in a secondary wastewater treatment plant", JOURNAL OF ENVIRONMENTAL SCIENCE ANO HEALTH. PART A:TOXIC HAZAROOUS SUBSTANCES ANO ENVIRONMENTAL ENGINEERING,vol. 43, no. 7, 29 April 2008 , pages 756-764 disclose a fluidized bed reactor comprising four cylindrical bodies of different diameters, where the influent enters the reactor at the bottom encouraging that the struvite granules were maintained and used to growth thereof resulting from the reaction of heterogeneous crystallization. This patent uses magnesium chloride, MgClz, as magnesium source using a solution of sodium hydroxide as the alkali to maintain the operation pH.

A similar process is described in CN102964970 (A) and the document Y. Li et al. "Struvite pellet crystallization in a high-strength nitrogen and phosphorus stream" WATER SCIENCE ANO TECHNOLOGY, vol. 68, no. 6, 1 September 2013, pages 1300-1305. Both documents disclose the same experimental system to crystallize struvite. The struvite crystallization system for the recovery of phosphates in wastewater comprising a crystallizer, a settler and a magnesium chloride addition unit. The crystallizer is constituted by two tubular zones of different sizes, the diameter of the precipitation zone being twice the diameter of the growth zone of the struvite crystals. The treated wastewater and the smaller and finer crystals of the crystallizer enter the secondary settler by gravity.

ES2303436 (B1) patent discloses a fluidized bed reactor in which air is supplied to flow together with the treated caudal in order to maintain the bed, being an aid a mechanical or hydraulical agitation. Furthermore, this patent discloses that the magnesium intake necessary for struvite crystallization is performed by adding a pulverulent byproduct with low MgO content and high presence of magnesia, from manufacturing industrial quality MgO from magnesite ore. This product is solubilized by bubbling with carbon dioxide in order to acidify and carbonate it, thereby obtaining a industrial MgO suspension and dissolved magnesium bicarbonate. In the patent application WO20121 34255 (A1) is disclosed a fluidized bed reactor with four cylindrical bodies of different diameters in which compressed air is injected at the bottom of the reactor to maintain a homogeneous stirring within the reactor and remove dioxide described carbon from the liquid phase, increasing the pH of this operation. In this crystallization system NaOH and seawater as alkalinity and magnesium sources are added respectively.

One source of magnesium commonly used in the struvite crystallization of is MgO (industrial or pure), where its main advantage is that not only provides magnesium ions but also is a source of alkalinity for the crystallization system (Wu et al. , Water Sci Technol 44 and, 161-166 (2001))..; Abma et al., Water Sci. Technol and. 61, 1715-1722 (2010)). It would be desirable, when industrial quality MgO powder is used as a source of magnesium and alkalinity use a product with a low content of magnesite (MgCO₃), which present a high law or content of MgO, preferably above 80%, and high specific surface in order to achieve efficient use of this product. One of the problems that the MgO industrial particles in contact with cold water, is their tendency to become compact, producing a decrease in their reactivity and increasing its consumption in struvite crystallization systems, thus decreasing the purity of generated struvite as it leaves mixed with unreacted MgO. In order to use more efficiently the industrial MgO is advisable to increase its reactivity by hydration in hot water (Matabola et al., J. Chem. Technol. Biot. 85, 1569-1574 (2010)), obtaining a suspension MgO with high content of Mg(OH)₂, which will be referred to hereinafter Mg(OH)₂ industrial suspension and decreasing its become compact, dramatically improving efficiency in the use of MgO as a source of magnesium and alkalinity (low ratio kg MgO kg used per kg P recovered).

### DESCRIPTION OF THE INVENTION

### Improvements with the present invention

The invention presents a method and struvite crystallization system for phosphates recovering in sewage, with which it has a twofold purpose, firstly, it prevents uncontrollably struvite crystallization which would clog pipes in sewage treatment stations and, secondly, it takes advantage of the potential of struvite crystallization in this type of water to produce struvite in a controlled manner by heterogeneous precipitation of the same in a crystallization system, producing a product with a particle size and composition suitable allowing a commercialization as slow release fertilizer. In this manner problems derived from uncontrolled struvite crystallization are avoided using a resource, phosphorus in the form of phosphate, which can be used as agricultural fertilizer.

With the present invention it is possible to achieve two environmentally positive objectives, first to recover phosphates in wastewater mitigating the effects that these phosphates can cause in the aquatic environment associated with waters eutrophication and on the other hand, by producing a fertilizer with commercial value which provides an important opportunity to reduce the dependence on fertilizer production and exploitation of the phosphate rocks.

The present invention improves the prior art by proposing an economically viable recovery of phosphate in wastewater, through a two stages system and method of struvite crystallization, by adding a suspension of magnesium hydroxide particles, preferably industrial grade low cost, resulting in lower operating costs compared to other technologies for recovering phosphates in wastewater.

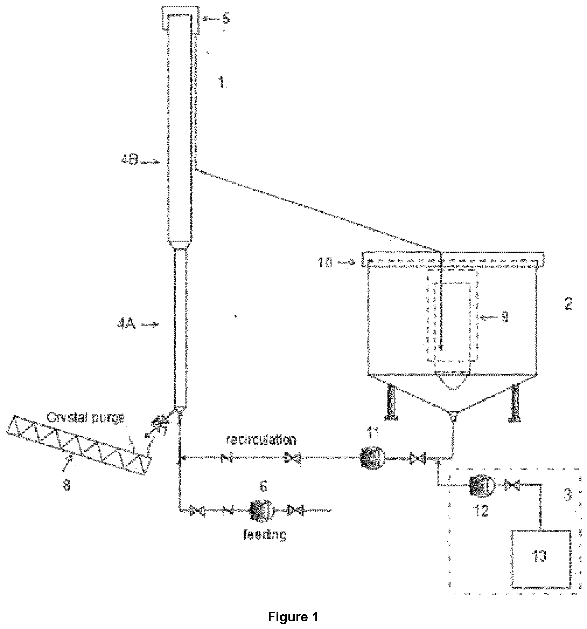

The improvements of the present invention are essentially based on the use of a crystallization process which mainly comprises two stages (Figure 1); the first one is based on a crystallizer fluidized bed of two phases, in which struvite granules with a particle size between 1 and 5 mm are obtained, and the other stage is based on the use of a settler designed to retain small struvite crystals, with sizes between 0.1 - 1 mm and crystals of size less than 0.1 mm called fine thus preventing washing these crystals with the final effluent, thereby promoting greater recovery phosphates from wastewater. Note that both elements crystallizer and settler, are serially connected and that the combination of both elements allows to obtain a suitable struvite granule size because the growth of struvite crystals is promoted, avoiding the problems associated with formation of fine crystals that compromise the quality of the final effluent and the economic viability of the process.

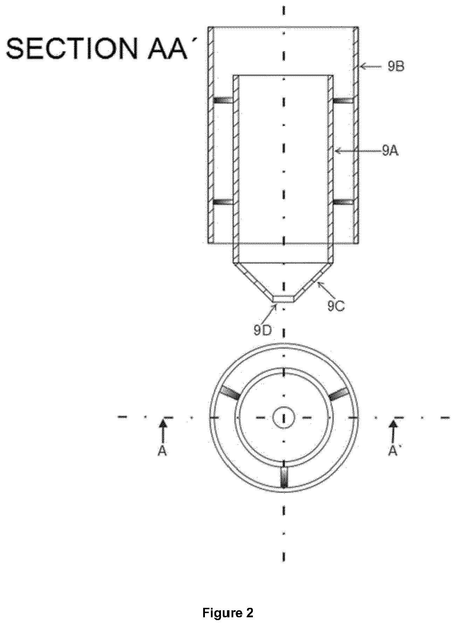

The wastewater is introduced into the first stage, specifically in the crystallizer, where an important part of phosphate wastewater is recovered by growing struvite granules maintained in suspension in the crystallizer. The smaller crystals, with the water coming out of this stage with reduced phosphate concentration, reach the second stage, where the growth of such crystals is promoted, wherein another fraction of the phosphates wastewater is recovered. One of the peculiarities of the settler of the present invention is that it is provided with a central distribution system (Figure 2), in which the growth of small struvite crystals, between 0.1 and 1 mm and the decantation of magnesium hydroxide particles that may exit the fluidized bed crystallizer are promoted, thereby improving the production of larger crystals and the efficient use of industrial magnesium hydroxide.

In the present invention, the struvite crystallization takes place preferably by using a suspension with high industrial magnesium hydroxide low cost as an external source of alkalinity and magnesium ions. Said suspension is characterized by a high content in MgO and Mg (OH)₂, preferably greater than 80%, and a high reactivity and solubility. With the use of this compound operating costs are reduced compared with the use of other chemicals such as NaOH, MgO or Mg(OH)₂ with purities higher than 95%, which are compounds with much higher prices.

Therefore, the present invention differs from existing technologies for phosphate recovering in the configuration of the crystallization system and the source of alkalinity and magnesium ions used.

Unlike other struvite crystallization systems, such as those described in patent documents ES2303436 and WO2012/134255, cited above, wherein air is introduced to promote agitation and fluidization of the bed of crystals in the reactor, in the present invention, the bed of granules located in the crystallizer is kept fluidized only by entering the wastewater to be treated, therefore it is not necessary to apply another mechanism for stirring said bed, getting the hydrodynamic conditions in which the struvite granules can increase its size, thereby obtaining a decrease in operating costs associated with the required fluidization such configurations.

### Detailed description of the invention

The present invention describes a struvite crystallization method and system for recovering phosphate in urban or industrial waste water, preferably with phosphate concentrations greater than 50 mg P / L, and more preferably greater than 100 mg P / L, and where phosphates are recovered by struvite crystallization in the form of granules, which can reach a diameter of up to 5 mm. Phosphate wastewater recovery takes place via a two-step process: a growth struvite granules stage and a small and thin struvite crystal growth stage. The system can operate at room temperature and preferably at temperatures below 30 ° C.

In a first aspect, the invention relates to a struvite recovery crystallization system of phosphate in wastewater, either urban, industrial or otherwise, hereinafter, "the system of the invention", characterized by being composed of three main elements:
a crystallizer (1) comprises two cylindrical bodies (4A, 4B) which have different diameters, the smaller cylindrical body (4A) is located at the bottom of the crystallizer (1) and the larger cylindrical body (4B) is located at the top of the crystallizer (1) and are coupled in series, a weir (5) located at the top of the crystallizer (1) and a feed pump (6);
a settler (2) with a perimeter weir (10) at the top of the settler (2) and a distribution system (9) located in the center of the settler (2) and a recirculation pump (11) located between the settler (2) and the crystallizer (1); and
a magnesium hydroxide adding unit (3);
characterized by
- the crystallizer (1) further comprises a purge valve (7) situated in the bottom of the crystallizer (1) for purging granules and an endless screw (8) located downstream of the purge valve (7);
- the feed pump (6) feeds the wastewater through an inlet in the lower cylindrical body (4A) of the crystallizer (1) flowing upwardly, wherein such wastewater before entering the lower cylindrical body (4A) is mixed with the recycle stream from the settler (2);
- the distribution system (9) is formed by two concentric cylinders (9A, 9B) and a hopper (9C) having a conical shape and a slope of between 30° and 60° connected to the inner concentric cylinder (9A), and the hopper (9C) is provided with a hole (9D) on its bottom which has a diameter between 20 and 50 mm; and
- the weir (5) is connected to the inner concentric cylinder (9A) of the distribution system (9) such that treated wastewater and small struvite crystals and fines can leave the crystallizer (1) via the weir (5) and enter by gravity the settler (2).

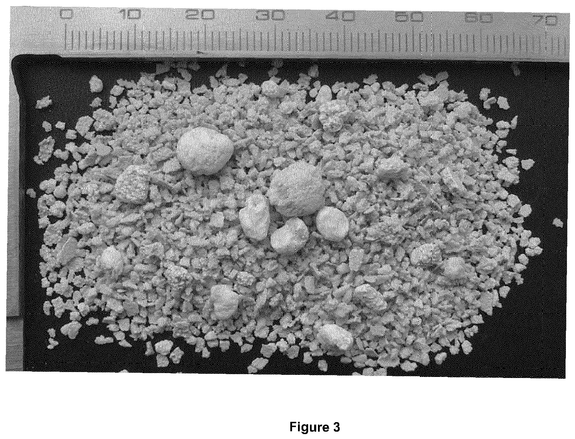

In Figure 1 the technical characteristics and the main elements of struvite crystallization system are presented, while in Figure 2 some essential design features of the invention are pointed out. In Figure 3 struvite granules obtained with the invention are shown.

In the present invention, the term granule relates to those struvite crystals having a particle size between 1 and 5 mm, small crystals to those that have a size between 0.1 and 1 mm and fine crystals to those struvite crystals with a size less than 0.1 mm.

In a preferred embodiment, the ratio of internal diameter between the cylindrical bodies (4A: 4B) is between 1.0:1.5 and 1.0: 4.0 m / m, while the length ratio between cylindrical bodies (4A: 4B) is between 1.0: 0.5 and 1.0: 2.0 m / m. In a more preferred embodiment, the ratio of internal diameter between the cylindrical bodies (4A: 4B) is 1.0: 1.8, whereas the ratio in length between the cylindrical bodies (4A: 4B) is 1,0: 1.4 m / m.

In another preferred embodiment, the crystallizer (1) is provided with two widenings having an angle between 30° and 60°, a widening between the inlet of the crystallizer (1) and the lower cylindrical body (4A), and the other widening between lower cylindrical body (4A) and the upper cylindrical body (4B). In a still more preferred embodiment, the angle of the two widenings is 45 °.

In the crystallizer (1) growth of struvite granules is promoted; to this aim, the raw wastewater is fed to the crystallizer (1) via a feed pump (6), said water is mixed with the recycle stream from the settler (2) before entering the bottom of the crystallizer (1) flowing upwardly through the bed of granules. The upward flow of wastewater promotes the fluidization of the granules in the crystallizer (1) and the growth of said granules, due to the struvite crystallization reaction, dragging struvite crystals of small size and fines towards the exit of crystallizer (1). Small and fine struvite crystals with sedimentation speed lower than average upflow velocity leave the crystallizer (1) together with the treated water. The treated water outlet of the crystallizer (1) is carried out via the weir (5), located on the top of the crystallizer (1) along the water surface, and that will set the maximum water level in the crystallizer (1). Preferably, the collecting water groove existing in the weir (5) is slightly inclined at its base to encourage the flow of water and small and fine crystals towards the exit. The function of said weir (5) is to guarantee uniform ascension of treated wastewater in the crystallizer (1) as to promote the output of small crystals, fine particles and magnesium hydroxide particles which had not reacted towards the settler (2). The treated wastewater and small crystals and fines from crystallizer (1) enter the settler (2) by gravity. The crystallizer (1) is provided with a purge valve (7) at the lower part which is used to purge the granules and to maintain the bed level of granules in the crystallizer (1) stable. The granules are collected in a endless screw (8), located downstream of the purge valve (7), to separate the purged granules from treated wastewater and promote partial dehydration thereof.

In the settler (2) the growth of small struvite crystals and fines is promoted. To this end it has a number of elements in the unit: a distribution system (9), a perimetral weir (10) and a pump (11) for recirculating crystals towards the crystallizer (1).

In a preferred embodiment, the distribution system is made up of two concentric cylinders (9A, 9B), the inner concentric cylinder (9A) and outer concentric cylinder (9B) located in the central part of the settler and a hopper (9C) attached the inner concentric cylinder (9A), where the hopper (9C) is provided with a hole (9D) on its bottom. Preferably, said elements are submerged below the water surface. The distribution system (9) is detailed in Figure 2. The purpose of the distribution system (9) is both to achieve a uniform entry of treated wastewater and small crystals and fines coming from the crystallizer (1) as to retain and promote crystal growth in small concentric cylinder (9A). The distribution system (9) is designed so that the fine crystals of struvite leave said system and enter on the outside of the settler, where its growth and sedimentation will be promoted. In a preferred embodiment, the inner concentric cylinder (9A) is connected to a hopper (9C), preferably conical, open from below through a hole (9D). In another more preferred embodiment, the hopper (9C) of the distribution system (9) has a slope of between 30° and 60° and the hole (9D) preferably has a diameter between 20 and 50 mm.

In another preferred embodiment, the distribution system (9) is located in the central part of the settler, the perimetral weir (10) is located at the top of the settler (2) and the recirculation pump (11) is located between the settler (2) and the crystallizer (1). In a more preferred embodiment, the recirculation pump (11) is located between the bottom of the settler (2) and the crystallizer (1). In another more preferred embodiment, the bottom of the settler (2) has a slope of between 30° and 60°.

The output of treated wastewater in the settler (2) is performed through a perimetral weir (10), preferably located at the top of the settler (2) along the water surface, and which will mark the maximum water level in the settler (2). The role of this perimeter weir (10) is to promote the uniform output of treated wastewater from the settler (2). Preferably, the perimetral weir (10) is formed by trapezoidal teeth.

The system of the present invention comprises a magnesium hydroxide suspension adding unit (3) in water, which is used as a source of magnesium and alkalinity during struvite crystallization. For this purpose, the unit has a dosing pump (12) and a storage tank (13). In a preferred embodiment, the dosing pump (12) is located between the storage tank (13) and driving feeding the recirculation pump (11). In a more preferred embodiment, the magnesium hydroxide suspension is of quality or industrial grade an is maintained homogenized by mechanical agitation in the storage tank (13). Therefore, in this preferred embodiment, the magnesium hydroxide adding unit system of the invention is especially adapted both in its dimensions and in its configuration to accommodate an industrial magnesium hydroxide suspension.

Therefore, in a preferred embodiment, the system of the invention is characterized by being composed of three main elements, as described above, but the magnesium hydroxide adding unit (3) is an industrial magnesium hydroxide adding unit (3).

In said preferred embodiment, struvite crystallization is carried out by using a suspension with industrial low cost high content magnesium hydroxide as an external source of alkalinity and magnesium ions. Said suspension is characterized in that by a high content in MgO and Mg (OH)₂, preferably greater than 80%, and high reactivity and solubility. With the use of this compound operating costs are decreased compared to the use of other chemicals such as NaOH or MgO or Mg (OH)₂ with purities higher than 95% in these compounds, which have much higher cost. Said industrial hydroxide magnesium comes from the hydration of a powdered product with particle size comprised between 20 and 200 µm, obtained in the process of industrial production of magnesium oxide from magnesium carbonate, which has been treated thermally and chemically in order to improve its chemical reactivity.

In another aspect, the invention relates to a method, hereinafter "the method of the invention", for the recovery of phosphate in wastewater (either urban, industrial or otherwise) by struvite crystallization through the system of the invention, described above, comprising two stages: a) growth stage of struvite granules b) growing stage struvite crystals of small size and fines.

The method of the invention is particularly suitable for the recovery of phosphate in wastewater with phosphate concentrations above 50 mg P / L, and preferably greater than 100 mg P / L, where phosphates are recovered by crystallization in the form struvite granules, which can reach a diameter of 5 mm and where phosphate concentrations in the effluent ranging from 10 to 30 mg P / L are obtained.

In step a), of struvite granule growth, larger struvite crystals are formed thus making the struvite granules bed. In a preferred embodiment of the method, the crystal growth comprising the struvite granule bed, occur in the crystallizer (1). In more preferred embodiment, in step a), of granule growth, crystallizes more than 70% of phosphate contained in raw wastewater.

In another preferred embodiment, in step a), of granule growth, the raw wastewater is introduced through the bottom of the lower cylindrical body (4A) of the crystalliser (1) by using a feed pump (6). The raw wastewater, before entering the lower cylindrical body (4A) of the crystalliser (1) is mixed with the recycle stream from the settler (2) flowing upwardly through the bed of granules and the crystallizer (1). The inflow of the crystallizer (1) is set so that the bed of struvite granules is fluidized and thereby the growth of said granules is promoted by crystallizing struvite. In a more preferred embodiment, once struvite granules increase the size it is necessary to increase the flow entering the crystallizer (1) with the aim of maintaining said fluidized granules within the crystallizer (1). Small crystals and fines with slower sedimentation rate than the average upflow leave the crystallizer (1) together with the treated wastewater. Preferably, the average upflow velocity is at least 270 cm / min within the lower cylindrical body (4A) and is at least 83 cm / min inside the upper cylindrical body (4B) of the crystallizer (1). In another preferred embodiment, the total mass of granules contained in the crystallizer (1) is controlled by purging the granules of the bed through the purge valve (7) by a loop pressure control using a digital manometer located in the lower cylindrical body (4A), establishing a maximum pressure setpoint which opens the purge valve (7). The liquored purge is collected in the endless screw (8), wherein the liquid is removed, and the granules are subsequently arranged in filter bags.

In another preferred embodiment, the treated wastewater in the crystallizer (1) and small struvite crystals and fines leave the same via the weir (5) at the top of the crystallizer (1) entering by gravity in the settler (2), wherein step b) crystal growing of small struvite crystals and fines takes place. Therefore, in another preferred embodiment, step b) of struvite crystals and fines growth takes place in the settler (2). In the settler (2) enter, by gravity, the wastewater treated in the crystallizer (1) and small struvite crystals and fines through the inner concentric cylinder (9A) of the distribution system (9), and subsequently they are homogeneously distributed in the distribution system (9) and the settler (2); wastewater flow occurs upwardly and then downwardly through the concentric cylinders (9A, 9B) of the distribution system (9) and the settler (2); preferably, said flow occurs upwardly within the inner concentric cylinder (9A) and then downward through the outer concentric cylinder (9B) of the distribution system (9), subsequently flowing upwards into the settler (2). In another preferred embodiment, the small crystals are fluidized within the distribution system (9) and the settler (2) by the produced water flow. In another preferred embodiment, the small crystals remain fluidized within the distribution system (9) and the settler (2) until they grow, due to struvite crystallisation reaction, and reach a sedimentation velocity greater than the average decanting upflow gravity velocity. In a more preferred embodiment, once these small crystals increase their size, they are decanted by gravity on the bottom of the hopper (9C) and exit the distribution system (9) through the hole (9D) in the same being, removed by the bottom of the settler (2) and recirculated towards the crystallizer (1), preferably by the recirculation pump (11). Moreover, preferably, the fine crystals which increase their size in the settler (2) sediment, and they are recirculated, together with small size crystals decanted in the distribution system (9), to the crystallizer (1). In a more preferred embodiment, the treated wastewater leaves the settler (2) through the perimetral overflow (10) which is preferably located at the top of the settler (2).

In another preferred embodiment, the method is characterized by the addition of a magnesium hydroxide suspension as source of magnesium and alkalinity during struvite crystallization; said suspension is added via a dosing pump (12) in the driving process that feeds the recirculation pump (11). In a more preferred embodiment, the magnesium hydroxide suspension is of quality or industrial grade. In another more preferred embodiment, the method is characterized by the dosage of magnesium hydroxide by a control pH loop using a pHmeter located in the crystallizer (1) and a suspension dosing pump (12) of magnesium hydroxide (3). A minimum pH setpoint is stablished, preferably a value greater than 8.0 pH, which kicks off the dosing pump (12) and a maximum setpoint pH, preferably a pH lower than 8.5, which stops the addition of magnesium hydroxide. In a more preferred embodiment, the suspension of industrial magnesium hydroxide is maintained homogenized by mechanical stirring in the storage tank (13). In another more preferred embodiment, the magnesium hydroxide which does not react in the crystallizer (1) leaves said unit together with the treated wastewater and small struvite crystals and struvite fines, entering the settler (2) where they are subsequently withdrawn through line feeding the recirculation pump (11). In another preferred embodiment, the crystallization system is preferably operated at temperatures below 30 ° C.

In another aspect, the invention relates to the use of the system and method of the invention as described above, for recovering phosphate in industrial waste water and/or wherein said wastewaters have phosphate concentrations higher than 50 mg P / L, and preferably greater than 100 mg P / L, and where phosphate levels are achieved in the effluent ranging from 10 to 30 mg P / L, depending on the pH and operation temperature, and the recovery of phosphate in struvite granules form can reach a diameter of up to 5 mm. In a preferred embodiment, said use is preferably produced by operating the system at temperatures below 30 ° C.

### BRIEF DESCRIPTION OF THE FIGURES

**Figure 1****.** Diagram of a preferred embodiment of struvite crystallization system in which main elements of the system are shown: the crystallizer (1), the settler (2) and the industrial hydroxide magnesium suspension addition unit (3). The crystallizer (1) comprises the following elements: two cylindrical bodies (4A, 4B) serially coupled, a weir (5) at the top of the crystallizer (1), a feed pump (6), a valve (7) for purging granules and an endless screw (8) for collecting struvite crystals. The settler (2) has a distribution system (9), a perimetral weir (10) located at the top of the settler (2) and a recirculation pump (11). The industrial hydroxide magnesium suspension addition unit (3) consists of a dosing pump (12) and an industrial magnesium hydroxide suspension storage tank (13).
**Figure 2****.** Detail of elevation view and plant (section AA') of the settler (2) distribution system (9) comprising two concentric inner and outer cylinders (9A) and (9B) used both for uniform treated water entry in the settler (2) as to promote growth of small crystals. At the bottom of the inner concentric cylinder (9A) it is coupled a hopper (9C) provided with a hole (9D) on its bottom.
**Figure 3****.** Photograph of struvite precipitated granules obtained during crystallization of struvite in an industrial plant, comparing its size with a millimeter ruler.

### EXAMPLE OF A DETAILED EMBODIMENT

A phosphates recovering of an urban waste water was conducted by a struvite crystallization system, specially designed with a crystallizer (1) to promote the growth of struvite granules and a settler (2) to promote growth of crystals struvite fines, as detailed in Figure 1. To enhance struvite crystallization an industrial hydroxide magnesium suspension was added as an external source of magnesium ions, since this is the limiting element and a base to raise the pH and promote struvite crystallization. A suspension of industrial quality magnesium hydroxide was prepared by mixing a powdery product, Magal TC from Magnesitas of Rubián Company, with an MgO content between 80 and 85%, with hot water in a tank with stirring. Said hydrated suspension showed a conversion of MgO to Mg (OH)₂ higher than 60%.

Phosphate recovery was performed in a wastewater treatment of urban wastewater from a population of 132,300 equivalent inhabitants. Specifically centrifugal sludge effluent from dewatering stage anaerobic digestion of industrial water treatment with a phosphate concentration of 70 mg P / L and ammonia nitrogen of 1,000 mg N / L was treated, and high alkalinity (850 mg C / L).

The struvite crystallization system consisted of a crystallizer (1) with a volume of 0.12 m³ and a settler (2) of 3.26 m³. Sludge dewatering centrifugal effluent flow to the crystallizer (1) was set to 1.5 m³/h, and the flow rate of the recycle stream from the settler (2) was set was similar to that of the wastewater, so that the recirculation ratio was maintained at 1. The total height of the crystallizer (1) was 4300 mm and that of the settler (2) was 1200 mm. A 75% of the phosphate present in the raw wastewater was recovered with the struvite crystallization system. Granules production was 4.0 kg/d, and the effluent contained a phosphate concentration between 10.0 and 30.0 mg P / L.

## Claims

1. A struvite crystallization system for recovering phosphate in wastewater, comprising three main elements:
a crystallizer (1) comprises two cylindrical bodies (4A, 4B) which have different diameters, the smaller cylindrical body (4A) is located at the bottom of the crystallizer (1) and the larger cylindrical body (4B) is located at the top of the crystallizer (1) and are coupled in series, a weir (5) located at the top of the crystallizer (1) and a feed pump (6);
a settler (2) with a perimeter weir (10) at the top of the settler (2) and a distribution system (9) located in the center of the settler (2) and a recirculation pump (11) located between the settler (2) and the crystallizer (1); and
a magnesium hydroxide adding unit (3);
**characterized by**
- the crystallizer (1) further comprises a purge valve (7) situated in the bottom of the crystallizer (1) for purging granules and an endless screw (8) located downstream of the purge valve (7);
- the feed pump (6) feeds the wastewater through an inlet in the lower cylindrical body (4A) of the crystallizer (1) flowing upwardly, wherein such wastewater before entering the lower cylindrical body (4A) is mixed with the recycle stream from the settler (2);
- the distribution system (9) is formed by two concentric cylinders (9A, 9B) and a hopper (9C) having a conical shape and a slope of between 30° and 60° connected to the inner concentric cylinder (9A), and the hopper (9C) is provided with a hole (9D) on its bottom which has a diameter between 20 and 50 mm; and
- the weir (5) is connected to the inner concentric cylinder (9A) of the distribution system (9) such that treated wastewater and small struvite crystals and fines can leave the crystallizer (1) via the weir (5) and enter by gravity the settler (2).

2. The crystallization system according to claim 1, wherein the ratio of internal diameter between the cylindrical bodies (4A: 4B) is between 1.0: 1.5 and 1.0: 4.0 m/m while length ratio between the cylindrical bodies (4A: 4B) is between 1.0: 0.5 and 1.0: 2.0 m/m.

3. The crystallization system according to any of claims 1 to 2, wherein the crystallizer (1) is provided with two widenings having an angle between 30° and 60°, a widening between the inlet of the crystallizer (1) and lower cylindrical body (4A), and the other widening between the lower cylindrical body (4A) and the upper cylindrical body (4B).

4. The crystallization system according to claim 1, **characterized in that** the bottom of the settler (2) has a slope of between 30° and 60°.

5. The crystallization system according to claim 1, wherein the magnesium hydroxide addition unit (3) comprises: a dosing pump (12) and a storage tank (13) for the magnesium hydroxide and wherein the dosing pump (12) is located between the storage tank (13) and the inlet tube of the recirculation pump (11).

6. A method for the recovery of phosphate in wastewater by struvite crystallization by the system described according to any of the preceding claims, **characterized in that** it comprises two steps: a) struvite granules growth stage and b) growth stage of small crystals and fines of struvite.

7. The method of claim 6, wherein step a) of granule growth takes place in the crystallizer (1), where larger struvite crystals are formed, producing a bed of granules and wherein more than 70% of the phosphate fed crystallizes in step a) of granule growth.

8. The method according to any of claims 6 to 7, wherein in step a), the average upflow velocity of wastewater is at least 270 cm/min within the lower cylindrical body (4A) and is at least 83 cm/min inside the upper cylindrical body (4B) of the crystallizer (1).

9. The method according to any of claims 6 to 8, wherein the total mass of granules contained in the crystallizer (1) is controlled by purging said bed of granules through a purge valve (7) by a loop pressure control using a digital pressure gauge located at the lower cylindrical body (4A), establishing a maximum pressure setpoint that opens the purge valve (7), and where the purge liquor is collected in the endless screw (8), wherein the liquid is removed, and the harvested granules are subsequently arranged in filter bags.

10. The method according to any of claims 6 to 9, wherein the treated wastewater in the crystallizer (1) and small struvite crystals and fines leave the crystallizer via the weir (5) at the top of the crystallizer (1), entering by gravity in the settler (2), wherein the growing step b) of small crystals and fines of struvite takes place.

11. The method of claim 10, wherein in step b), the treated wastewater in the crystallizer (1) and small crystals and fines of struvite enter the settler (2) through the inner concentric cylinder (9A) of the distribution system (9), and subsequently are homogeneously distributed in the distribution system (9) and the settler (2); and wherein the wastewater flow occurs upwardly and then downwardly through the concentric cylinders (9A, 9B) of the distribution system (9) and the settler (2) and wherein the treated wastewater leaves the settler (2) by the perimetral weir (10) thereof.

12. The method of claim 11, wherein the small struvite crystals that are fluidized within the distribution system (9) and the settler (2) grow and reach a sedimentation velocity higher than the average upflow rate, gravity decanting; and where decanted crystals in the distribution system (9) go through the hole (9D) located at the bottom of the hopper (9C) being removed by the bottom of the settler (2) and recirculated along with the fine crystals, to the crystallizer (1).

13. The method according to any of claims 6 to 12, **characterized in that** by the addition of a magnesium hydroxide suspension as a source of magnesium and alkalinity during struvite crystallization using a dosing pump (12) that discharges such suspension in the inlet tube of the recirculation pump (11).

14. The method of claim 13, **characterized in that** by dosing the suspension of magnesium hydroxide through a pH on/off control loop, using a pH meter installed in the crystallizer (1), establishing a minimum pH setpoint at a value of pH above 8.0, which starts the dosing pump (12) and a maximum pH setpoint at a pH value below 8.5, which stops the addition of the of magnesium hydroxide suspension.

15. The method of any claim 13 or 14, wherein the magnesium hydroxide suspension is maintained homogenized by mechanical stirring in the storage tank (13).

16. The method of any of claims 13 to 15, wherein the magnesium hydroxide which does not react in the crystallizer (1) leaves said unit together with the treated wastewater and small crystals and fines of struvite, entering in the settler (2), where they are subsequently withdrawn through inlet tube feeding the recirculation pump (11).

17. The method according to claims 6 to 16, wherein the crystallization system is operated at temperatures below 30° C.

18. Use of a struvite crystallization system according claims 1 to 5, or a method according to claims 6 to 17, for phosphate recovery in wastewater with phosphate concentrations above 50 mg P / L, and preferably greater than 100 mg P / L, where phosphates are recovered by crystallization in struvite granules, which can reach a diameter up to 5 mm, and where phosphate levels achieved in the effluent ranges from 10 to 30 mg P/L.

## Patentansprüche

1. Struvitkristallisationssystem zur Rückgewinnung von Phosphat in Abwässern, umfassend drei Hauptelemente:
einen Kristallisator (1), der zwei zylindrische Körper (4A, 4B) umfasst, die unterschiedliche Durchmesser aufweisen, wobei sich der kleinere zylindrische Körper (4A) am Boden des Kristallisators (1) und der größere zylindrische Körper (4B) am Oberteil des Kristallisators (1) befindet und in Reihe gekoppelt sind, ein Wehr (5), das sich am Oberteil des Kristallisators (1) befindet, und eine Speisepumpe (6);
einen Abscheider (2) mit einem Umfangswehr (10) am Oberteil des Abscheiders (2) und einem Verteilungssystem (9), das sich in der Mitte des Abscheiders (2) befindet, und einer Rückführpumpe (11), die sich zwischen dem Abscheider (2) und dem Kristallisator (1) befindet; und
eine Magnesiumhydroxid-Zugabeeinheit (3);
**dadurch gekennzeichnet, dass**
- der Kristallisator (1) ferner ein Spülventil (7), das sich am Boden des Kristallisators (1) befindet, um Granulat zu spülen, und eine Endlosschnecke (8) umfasst, die sich stromabwärts des Spülventils (7) befindet;
- die Speisepumpe (6) das Abwasser durch einen Einlass im unteren zylindrischen Körper (4A) des Kristallisators (1) nach oben fließend zuführt, wobei dieses Abwasser vor dem Eintritt in den unteren zylindrischen Körper (4A) mit dem Rückführstrom aus dem Abscheider (2) vermischt wird;
- das Verteilungssystem (9) von zwei konzentrischen Zylindern (9A, 9B) und einem Trichter (9C) gebildet wird, der eine konische Form und eine Neigung zwischen 30° und 60° aufweist und mit dem inneren konzentrischen Zylinder (9A) verbunden ist, und der Trichter (9C) an seinem Boden mit einem Loch (9D) versehen ist, das einen Durchmesser zwischen 20 und 50 mm aufweist; und
- das Wehr (5) mit dem inneren konzentrischen Zylinder (9A) des Verteilungssystems (9) verbunden ist, so dass gereinigtes Abwasser und kleine Struvitkristalle und -feinteile den Kristallisator (1) über das Wehr (5) verlassen und durch Schwerkraft in den Abscheider (2) eintreten können.

2. Kristallisationssystem nach Anspruch 1, wobei das Verhältnis des Innendurchmessers zwischen den zylindrischen Körpern (4A: 4B) zwischen 1,0: 1,5 und 1,0: 4,0 m/m liegt, während das Längenverhältnis zwischen den zylindrischen Körpern (4A: 4B) zwischen 1,0: 0,5 und 1,0: 2,0 m/m liegt.

3. Kristallisationssystem nach einem der Ansprüche 1 bis 2, wobei der Kristallisator (1) mit zwei Aufweitungen versehen ist, die einen Winkel zwischen 30° und 60° aufweisen, eine Aufweitung zwischen dem Einlass des Kristallisators (1) und dem unteren zylindrischen Körper (4A) und die andere Aufweitung zwischen dem unteren zylindrischen Körper (4A) und dem oberen zylindrischen Körper (4B).

4. Kristallisationssystem nach Anspruch 1, **dadurch gekennzeichnet, dass** der Boden des Abscheiders (2) eine Neigung zwischen 30° und 60° aufweist.

5. Kristallisationssystem nach Anspruch 1, wobei die Magnesiumhydroxid-Zugabeeinheit (3) Folgendes umfasst: eine Dosierpumpe (12) und einen Vorratsbehälter (13) für das Magnesiumhydroxid und wobei sich die Dosierpumpe (12) zwischen dem Vorratsbehälter (13) und dem Einlassrohr der Rückführpumpe (11) befindet.

6. Verfahren zur Rückgewinnung von Phosphat in Abwässern durch Struvitkristallisation mittels des nach einem der vorhergehenden Ansprüche beschriebenen Systems, **dadurch gekennzeichnet, dass** es zwei Schritte umfasst: a) Wachstumsphase von Struvitgranulat und b) Wachstumsphase von kleinen Kristallen und Feinanteilen von Struvit.

7. Verfahren nach Anspruch 6, wobei Schritt a) des Granulatwachstums im Kristallisator (1) stattfindet, wo größere Struvitkristalle gebildet werden, wobei ein Bett aus Granulat erzeugt wird und wobei mehr als 70 % des eingespeisten Phosphats in Schritt a) des Granulatwachstums kristallisiert.

8. Verfahren nach einem der Ansprüche 6 bis 7, wobei in Schritt a) die durchschnittliche Aufwärtsströmgeschwindigkeit des Abwassers mindestens 270 cm/min innerhalb des unteren zylindrischen Körpers (4A) und mindestens 83 cm/min innerhalb des oberen zylindrischen Körpers (4B) des Kristallisators (1) beträgt.

9. Verfahren nach einem der Ansprüche 6 bis 8, wobei die Gesamtmasse des in dem Kristallisator (1) enthaltenen Granulats durch Spülen des Granulatbetts durch ein Spülventil (7) mittels einer Schleifendruckkontrolle unter Verwendung eines digitalen Druckmessers, der sich an dem unteren zylindrischen Körper (4A) befindet, kontrolliert wird, wobei ein maximaler Druckeinstellwert etabliert wird, der das Spülventil (7) öffnet, und wo die Spülflüssigkeit in der Endlosschnecke (8) gesammelt wird, wobei die Flüssigkeit entfernt wird und das gewonnene Granulat nachfolgend in Filterbeutel angeordnet wird.

10. Verfahren nach einem der Ansprüche 6 bis 9, wobei das behandelte Abwasser im Kristallisator (1) und kleine Struvitkristalle und -feinteile den Kristallisator über das Wehr (5) am oberen Ende des Kristallisators (1) verlassen und durch Schwerkraft in den Abscheider (2) eintreten, wobei der Wachstumsschritt b) der kleinen Struvitkristalle und -feinteile stattfindet.

11. Verfahren nach Anspruch 10, wobei in Schritt b) das behandelte Abwasser im Kristallisator (1) und kleine Kristalle und Feinanteile von Struvit durch den inneren konzentrischen Zylinder (9A) des Verteilungssystems (9) in den Abscheider (2) eintreten und nachfolgend im Verteilungssystem (9) und im Abscheider (2) homogen verteilt werden; und wobei die Abwasserströmung aufwärts und dann abwärts durch die konzentrischen Zylinder (9A, 9B) des Verteilungssystems (9) und des Abscheiders (2) erfolgt und wobei das behandelte Abwasser den Abscheider (2) durch das perimetrische Wehr (10) davon verlässt.

12. Verfahren nach Anspruch 11, wobei die kleinen Struvitkristalle, die innerhalb des Verteilungssystems (9) und des Abscheiders (2) verwirbelt werden, wachsen und eine Sedimentationsgeschwindigkeit erreichen, die höher ist als die durchschnittliche Aufwärtsströmgeschwindigkeit, wobei sie durch Schwerkraft dekantieren; und wobei die dekantierten Kristalle im Verteilungssystem (9) durch das Loch (9D) passieren, das sich am Boden des Trichters (9C) befindet, wobei sie durch den Boden des Abscheiders (2) entfernt werden und zusammen mit den feinen Kristallen zum Kristallisator (1) rückgeführt werden.

13. Verfahren nach einem der Ansprüche 6 bis 12, **gekennzeichnet durch** die Zugabe einer Magnesiumhydroxid-Suspension als Magnesium- und Alkalinitätsquelle während der Struvitkristallisation unter Verwendung einer Dosierpumpe (12), die eine solche Suspension in das Einlassrohr der Rückführpumpe (11) austrägt.

14. Verfahren nach Anspruch 13, **dadurch gekennzeichnet, dass** durch die Dosierung der Magnesiumhydroxid-Suspension über einen Ein/Aus-Kontrollkreis für den pH-Wert unter Verwendung eines im Kristallisator (1) installierten pH-Meters ein minimaler pH-Einstellwert bei einem pH-Wert über 8,0, der die Dosierpumpe (12) startet, und ein maximaler pH-Einstellwert bei einem pH-Wert unter 8,5 etabliert wird, der die Zugabe der Magnesiumhydroxid-Suspension stoppt.

15. Verfahren gemäß einem der Ansprüche 13 oder 14, wobei die Magnesiumhydroxid-Suspension durch mechanisches Rühren in dem Vorratsbehälter (13) homogenisiert gehalten wird.

16. Verfahren nach einem der Ansprüche 13 bis 15, wobei das Magnesiumhydroxid, das im Kristallisator (1) nicht umgesetzt wird, die Einheit zusammen mit dem behandelten Abwasser und den kleinen Struvitkristallen und -feinanteilen verlässt und in den Abscheider (2) eintritt, wo sie nachfolgend durch das Einlassrohr, das die Rückführpumpe (11) speist, abgezogen werden.

17. Verfahren gemäß Anspruch 6 bis 16, wobei das Kristallisationssystem bei Temperaturen unter 30 °C betrieben wird.

18. Verwendung eines Struvitkristallisationssystems gemäß Anspruch 1 bis 5 oder eines Verfahrens gemäß Anspruch 6 bis 17 zur Phosphatrückgewinnung in Abwässern mit Phosphatkonzentrationen über 50 mg P/L, und vorzugsweise über 100 mg P/L, wobei Phosphate durch Kristallisation in Struvitgranulat zurückgewonnen werden, das einen Durchmesser von bis zu 5 mm erreichen kann, und wobei die im Abfluss erreichten Phosphatwerte im Bereich von 10 bis 30 mg P/L liegen.

## Revendications

1. Système de cristallisation de struvite pour la récupération de phosphate dans les eaux usées, comprenant trois éléments principaux :
un cristalliseur (1) qui comprend deux corps cylindriques (4A, 4B) qui ont des diamètres différents, le corps cylindrique le plus petit (4A) est situé dans la partie inférieure du cristalliseur (1) et le corps cylindrique le plus grand (4B) est situé dans la partie supérieure du cristalliseur (1) et sont reliés en série, un déversoir (5) situé dans la partie supérieure du cristalliseur (1) et une pompe d'alimentation (6) ;
un décanteur (2) avec un déversoir périmétrique (10) dans la partie supérieure du décanteur (2) et un système de distribution (9) situé au centre du décanteur (2) et une pompe de recirculation (11) située entre le décanteur (2) et le cristalliseur (1) ; et
une unité d'ajout d'hydroxyde de magnésium (3) ;
**caractérisé en ce que**
- le cristalliseur (1) comprend en outre une vanne de purge (7) située dans la partie inférieure du cristalliseur (1) pour purger des granules et une vis sans fin (8) située en aval de la vanne de purge (7) ;
- la pompe d'alimentation (6) alimente les eaux usées à travers une entrée dans le corps cylindrique inférieur (4A) du cristalliseur (1) s'écoulant vers le haut, dans lequel telles eaux usées, avant d'entrer dans le corps cylindrique inférieur (4A), sont mélangées avec le flux de recyclage provenant du décanteur (2) ;
- le système de distribution (9) est formé par deux cylindres concentriques (9A, 9B) et une trémie (9C) ayant une forme conique et une pente comprise entre 30° et 60° reliée au cylindre concentrique interne (9A), et la trémie (9C) est dotée d'un trou (9D) sur sa partie inférieure qui a un diamètre compris entre 20 et 50 mm ; et
- le déversoir (5) est relié au cylindre concentrique interne (9A) du système de distribution (9) de sorte que les eaux usées traitées et des petits cristaux de struvite et des particules fines peuvent sortir du cristalliseur (1) par le déversoir (5) et entrer par gravité dans le décanteur (2).

2. Système de cristallisation selon la revendication 1, dans lequel le rapport de diamètre interne entre les corps cylindriques (4A : 4B) est compris entre 1,0 : 1,5 et 1,0: 4,0 m/m, tandis que le rapport de longueur entre les corps cylindriques (4A : 4B) est compris entre 1,0 : 0,5 et 1,0 : 2,0 m/m.

3. Système de cristallisation selon l'une quelconque des revendications 1 à 2, dans lequel le cristalliseur (1) est pourvu de deux élargissements ayant un angle compris entre 30° et 60°, un élargissement entre l'entrée du cristalliseur (1) et le corps cylindrique inférieur (4A), et l'autre élargissement entre le corps cylindrique inférieur (4A) et le corps cylindrique supérieur (4B).

4. Système de cristallisation selon la revendication 1, **caractérisé en ce que** la partie inférieure du décanteur (2) a une pente comprise entre 30° et 60°.

5. Système de cristallisation selon la revendication 1, dans lequel l'unité d'ajout d'hydroxyde de magnésium (3) comprend : une pompe doseuse (12) et un réservoir de stockage (13) pour l'hydroxyde de magnésium et dans lequel la pompe doseuse (12) est située entre le réservoir de stockage (13) et le tube d'entrée de la pompe de recirculation (11).

6. Procédé pour la récupération de phosphate dans les eaux usées par cristallisation de struvite au moyen du système selon l'une quelconque des revendications précédentes, **caractérisé en ce qu'**il comprend deux étapes : a) étape de croissance de granules de struvite, et b) étape de croissance de petits cristaux et de particules fines de struvite.

7. Procédé selon revendication 6, dans lequel étape a) de croissance de granules a lieu dans le cristalliseur (1), où des cristaux de struvite plus grands sont formés, produisant un lit de granules et dans lequel plus de 70% du phosphate alimenté cristallise dans l'étape a) de croissance de granules.

8. Procédé selon l'une quelconque des revendications 6 à 7, dans lequel, dans l'étape a), la vitesse d'écoulement ascendant moyenne des eaux usées est d'au moins 270 cm/min au sein du corps cylindrique inférieur (4A) et est d'au moins 83 cm/min au sein du corps cylindrique supérieur (4B) du cristalliseur (1).

9. Procédé selon l'une quelconque des revendications 6 à 8, dans lequel la masse totale de granules contenus dans le cristalliseur (1) est contrôlée en purgeant ledit lit de granules à travers une vanne de purge (7) par un contrôle de pression en boucle en utilisant un manomètre digital situé dans le corps cylindrique inférieur (4A), établissant une consigne de pression maximale qui ouvre la vanne de purge (7), et dans lequel le liqueur de purge est collectée dans la vis sans fin (8), dans lequel le liquide est éliminé, et les granules récoltés sont ensuite disposés dans des sacs de filtre.

10. Procédé selon l'une quelconque des revendications 6 à 9, dans lequel les eaux usées traitées dans le cristalliseur (1) et des petits cristaux de struvite et des particules fines sortent du cristalliseur par le déversoir (5) dans la partie supérieure du cristalliseur (1), en entrant par gravité dans le décanteur (2), dans lequel a lieu l'étape de croissance b) de petits cristaux et de particules fines de struvite.

11. Procédé selon la revendication 10, dans lequel dans l'étape b), les eaux usées traitées dans le cristalliseur (1) et des petits cristaux et des particules fines de struvite entrent dans le décanteur (2) à travers le cylindre concentrique interne (9A) du système de distribution (9), et ensuite sont distribués de manière homogène dans le système de distribution (9) et le décanteur (2) ; et dans lequel l'écoulement des eaux usées se produit vers le haut et puis vers le bas à travers les cylindres concentriques (9A, 9B) du système de distribution (9) et le décanteur (2) et dans lequel les eaux usées traitées sortent du décanteur (2) par le déversoir périmétrique (10) de celui-ci.

12. Procédé selon la revendication 11, dans lequel les petits cristaux de struvite qui sont fluidisés dans le système de distribution (9) et le décanteur (2) croissent et atteignent une vitesse de sédimentation supérieure au débit ascendant moyen, en décantant par gravité ; et où les cristaux décantés dans le système de distribution (9) passent à travers le trou (9D) situé dans la partie inférieure de la trémie (9C) étant retirés par la partie inférieure du décanteur (2) et remis en circulation avec les cristaux fins, vers le cristalliseur (1).

13. Procédé selon l'une quelconque des revendications 6 à 12, **caractérisé en ce que**, par le biais de l'ajout d'une suspension d'hydroxyde de magnésium comme source de magnésium et d'alcalinité lors de la cristallisation de struvite en utilisant une pompe doseuse (12) qui décharge une telle suspension dans le tube d'entrée de la pompe de recirculation (11).

14. Procédé selon la revendication 13, **caractérisé en ce que**, par le biais du dosage de la suspension d'hydroxyde de magnésium à travers une boucle de contrôle du pH d'activation/désactivation, en utilisant un pH-mètre installé dans le cristalliseur (1), en établissant une consigne de pH minimale à une valeur de pH supérieure à 8,0, ce qui démarre la pompe doseuse (12), et une cosigne de pH maximale à une valeur de pH inférieure à 8,5, ce qui arrête l'ajout de la suspension d'hydroxyde de magnésium.

15. Procédé selon l'une quelconque des revendications 13 ou 14, dans lequel la suspension d'hydroxyde de magnésium est maintenue homogénéisée par le biais d'agitation mécanique dans le réservoir de stockage (13).

16. Procédé selon l'une quelconque des revendications 13 à 15, dans lequel l'hydroxyde de magnésium qui ne réagit pas dans le cristalliseur (1) sorte de ladite unité avec les eaux usées traitées et les petits cristaux et les particules fines de struvite, entrant dans le décanteur (2), où ils sont ensuite retirés à travers le tube d'entrée alimentant la pompe de recirculation (11).

17. Procédé selon les revendications 6 à 16, dans lequel the système de cristallisation fonctionne à des températures inférieures à 30°C.

18. Utilisation d'un système de cristallisation de struvite selon les revendications 1 à 5, ou d'un procédé selon les revendications 6 à 17, pour la récupération de phosphate dans les eaux usées avec des concentrations de phosphate supérieures à 50 mg P / L, et de préférence supérieures à 100 mg P / L, où les phosphates sont récupérés par cristallisation dans des granules de struvite, qui peuvent atteindre un diamètre allant jusqu'à 5 mm, et où les niveaux de phosphate atteints dans l'effluent varient de 10 jusqu'à 30 mg P/L.
